# EUROPEAN PATENT SPECIFICATION

(11) **EP 0 679 999 B1**
(45) Date of publication and mention of the grant of the patent: **09.08.2000**
(21) Application number: 95302653.1
(22) Date of filing: 20.04.1995
(51) Int. Cl.: G06F 17/30

(54) **A method and apparatus for storage and retrieval of data**
Verfahren und Gerät zum Speichern und Wiederauffinden von Daten
Méthode et appareil de stockage et de recouvrement de données

(30) Priority: 21.04.1994 GB 9407899; 21.04.1994 GB 9407900
(43) Date of publication of application: 02.11.1995
(73) Proprietor: BRITISH TELECOMMUNICATIONS public limited company, London EC1A 7AJ (GB)
(72) Inventor: Pinder, Roy Terrence, Windsor SL4 6NF (GB); Sellens, Corrinne Margaret Anne, London, N16 5UD (GB); Wainwright, Joanne Elizabeth, London, N16 (GB)
(74) Representative: Roberts, Simon Christopher

(56) References cited:
- HYPERMEDIA. PROCEEDINGS DER INTERNATIONALEN HYPERMEDIA '93 KONFERENZ (HYPERMEDIA. PROCEEDINGS OF THE INTERNATIONAL HYPERMEDIA '93 CONFERENCE), ZURICH, SWITZERLAND, 2-3 MARCH 1993, ISBN 3-540-56477-2, 1993, BERLIN, GERMANY, SPRINGER-VERLAG, GERMANY, pages 150-159, HEROLD W ET AL 'Step index as aid to navigation through hypertext documents'
- IBM TECHNICAL DISCLOSURE BULLETIN, vol. 31, no. 3, August 1988 page 30/31 XP 000023399 'CONVERSION OF STRUCTURED DOCUMENTS FOR FILING'
- INTERNATIONAL JOURNAL OF MAN-MACHINE STUDIES, JUNE 1993, UK, vol. 38, no. 6, ISSN 0020-7373, pages 1017-1030, SAVOY J 'Searching information in hypertext systems using multiple sources of evidence'
- PROTEXT III. PROCEEDINGS OF THE THIRD INTERNATIONAL CONFERENCE ON TEXT PROCESSING SYSTEMS, DUBLIN, IRELAND, 22-24 OCT. 1986, ISBN 0-906783-55-0, 1987, DUN LAOGHAIRE, IRELAND, BOOLE PRESS, IRELAND, pages 20-29, MORRIS R A 'The Interleaf user interface'

## Description

This invention relates to a method and apparatus for storage and subsequent retrieval of data on a computer database.

It is known to store documents on a computer database and to search those documents by a user of the database entering a keyword. One or more documents having that keyword are then returned by the database to the user. If a document is large, this may result in a large amount of information being provided to the user. Not all of the information will be relevant to the user and that which is may not be readily discernible.

A step index as an aid in browsing hypertext documents is described in the following article: "Step index as an Aid to Navigation through Hypertext Documents", Werner Herold et al, Proceedings of the International Hypermedia Conference, Zurich, Switzerland, March 1993, published by Springer-Verlag, Germany.

The present invention arose in an attempt to alleviate these problems.

According to the invention there is provided a method of storing data on, and retrieving data from, a computer database, the method comprising the steps of:
creating in the computer database a hierarchical structure of nodes for storing portions of a document so that the portions of the document can be arranged in a hierarchical manner, each portion of the document being a member of a family of portions of the document of the same class;
storing each portion of the document on a respective one of said nodes; and
in response to a search request by a user of the database relating to a particular item of data, searching the hierarchical structure of nodes to find the node containing the item of data in the search request;
determining a family to which the portion of the document stored on said node belongs; and
for each of at least some of the members of said family, returning to the user at least part of the corresponding portion of the document.

Thus, by storing the portions of the document in a hierarchical structure, it is possible to retrieve data items that are related to the information being searched for. The method thus returns only a subset of the data that appears in the document, thereby reducing the amount of irrelevant data.

It will be possible to return all the data that appears in a family or a subset of the data. For example the method could include the step of defining the scope of the search. A search selected to have a wide scope would return data corresponding to all members of a family. The scope of the search could be selected by the user when requesting a search. As this might cause irritation to the user, a default scope may be provided.

According to a second aspect of the invention there is a computer system comprising:
a computer database;
means for creating in the computer database a hierarchical structure of nodes on which portions of a document can be stored in a hierarchical manner so that each portion of the document is a member of a family of portions of the document of the same class;
means for storing each portion of the document on a respective one of said nodes;
means for searching the hierarchical structure of nodes, in response to a search request by a user of the database relating to a particular item of data, to find the node containing the item data in the search request;
means for determining a family to which the portion of the document stored on said node belongs; and
means for returning to the user, for each of at least some of the members of said family, at least part of the corresponding portion of the document.

An example of the type of document that may be stored is a price-list of goods and services supplied by a company. Most large companies issue updated price-lists a number of times in each year. The reasons for the frequency of the updates can vary and can include inflation, price-cutting or promotional activity such as the launch of new products or services. Such companies realise that the price-list must be a carefully designed service. It must inform the customer and not mislead. The price-list may also be one of the few opportunities that the company has to convey its image to the customer. Thus it will be understood that the preparation of the price-list is not a trivial matter but one requiring considerable intellectual effort and design skills.

Word-processing systems and computer aided design tools are now being used for the preparation of price-lists. It will be appreciated that, as the price-list is frequently revised and then published, there may be many different versions of the price-list on the system. The designer thus has to monitor the different versions and, by noting when they are created, determine which is the most appropriate version to revise. A degree of diligence is thus required which may not be reasonable to expect of the designer.

Preferably, where there is more than one version of a document stored on the database, each version is represented by a different icon.

By displaying icons representing the documents at different stages of production, the designer will be able to rapidly determine the document that is to be worked upon. There will be no requirement for the designer to diligently record the creation of a document or its subsequent change in status.

Specific embodiments of the invention will now be described, by way of example only, with reference to the drawings in which:-
Figure 1 shows a computer storage and retrieval system operating in accordance with the invention;
Figure 2 is a block diagram of the main components of the computer system shown in figure 1;
Figure 3 shows in block diagram form the way in which the memory of the computer shown in figure 2 is allocated;
Figure 4 shows part of a document;
Figure 5 is a flow chart illustrating the operation of the computer system of Figure 1;
Figure 6 shows portions of the document shown in figure 4 arranged in a hierarchical structure;
Figures 7 and 8 show typical displays of information retrieved from the document stored in memory; and
Figures 9 and 10 show another example of a document to be stored and retrieved from a system operating in accordance with the invention.

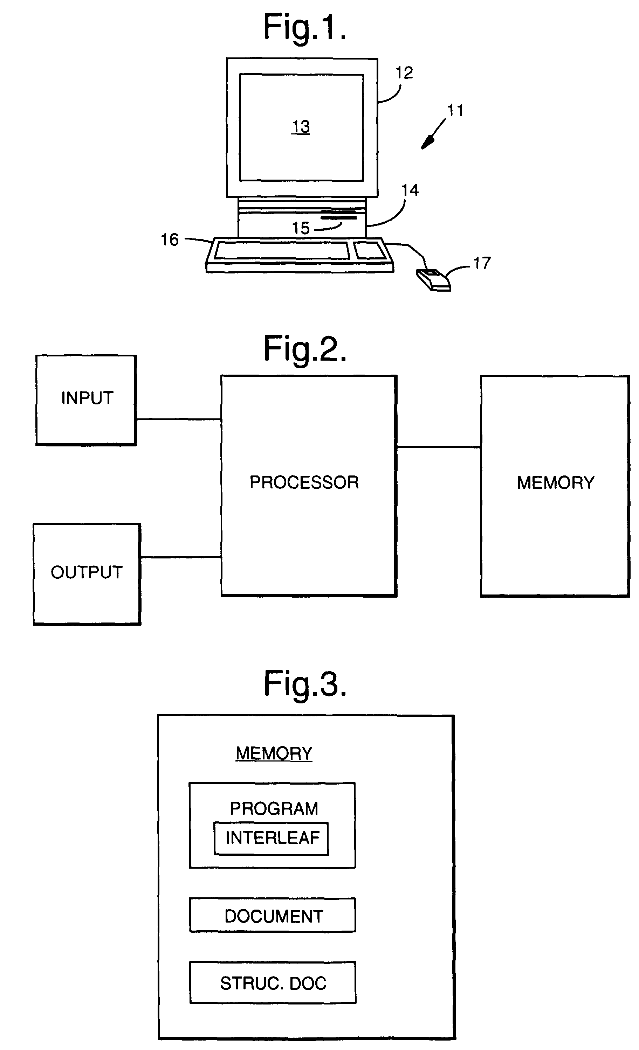

With reference to figure 1, a computer system 11 comprises a visual display unit (VDU) 12 having a display 13, a terminal unit 14 having disc drives 15, a keyboard 16 connected to the terminal unit 14 and a mouse 17 also connected to the terminal unit 14. These components are of a well known type. For example, the terminal unit 14 may be a Sun microcomputer marketed by Sun Corporation or other type.

As will be appreciated by those familiar with computers, the terminal unit 14 encloses a microprocessor, random access memory (RAM) and ready only memory (ROM) in the form of semiconductor chips. The disc drives 15, the RAM and the ROM together form the memory of the computer system. Input and output devices in the form of the keyboard 16, the mouse 17, the VDU 12, the microprocessor and the memory are interconnected as shown in figure 2.

The memory has a plurality of memory locations containing data and instructions (program) for use by the processor in performing the computer operations. The data or instructions are held in the memory locations as hexadecimal numbers. The memory locations have addresses which allow the processor to request the required instruction or data by sending an addressed request. As was earlier alluded to, the program embodying the method of the invention is stored in this memory. The memory also has space allocated for data concerning a document to be operated on. Thus the memory is partitioned as represented in figure 3.

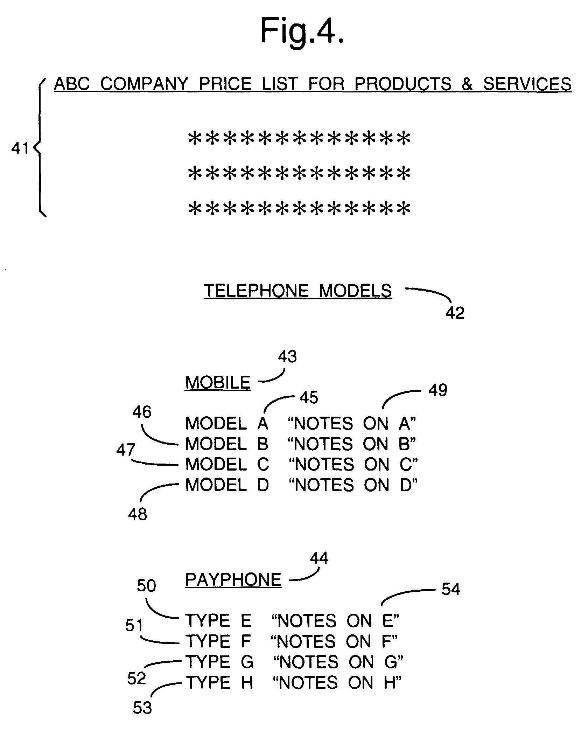

An extract of a price list document to be stored on the computer system is shown in figure 4. The price list has a header 41 comprising a company name and typical text. The particular extract shown is information relating to telephone models sold by a company called "ABC". This extract can be considered to comprise a particular family having a common theme, that of types of telephones sold by "ABC". The extract has a header 42 *"Telephone Models"* and subdivision headings *"MOBILE"* 43 and *"PAYPHONE"* 44. Each subdivision has further subdivisions .

*"MOBILE"* 43 has subdivisions 45, 46, 47 and 48. Subdivision 45 comprises a description of the product in this case *"MODEL A"* and a further subdivision comprising textual product information on model A, shown in the figure as *"Notes on A"* 49. The subdivision 46, 47 and 48 have a similar structure to subdivision 45 and will therefore not be described. The textual information could comprise, for example, information on battery capacity, number storage capacity or whether the particular telephone has an illuminated keyboard.

The PAYPHONE subdivision 44 is similar in structure to the MOBILE subdivision 43, containing further subdivisions 50, 51, 52 and 53 on the product type. For example, *"TYPE E"* 50 has as its subdivision 54 *"notes on E"* which is product textual information.

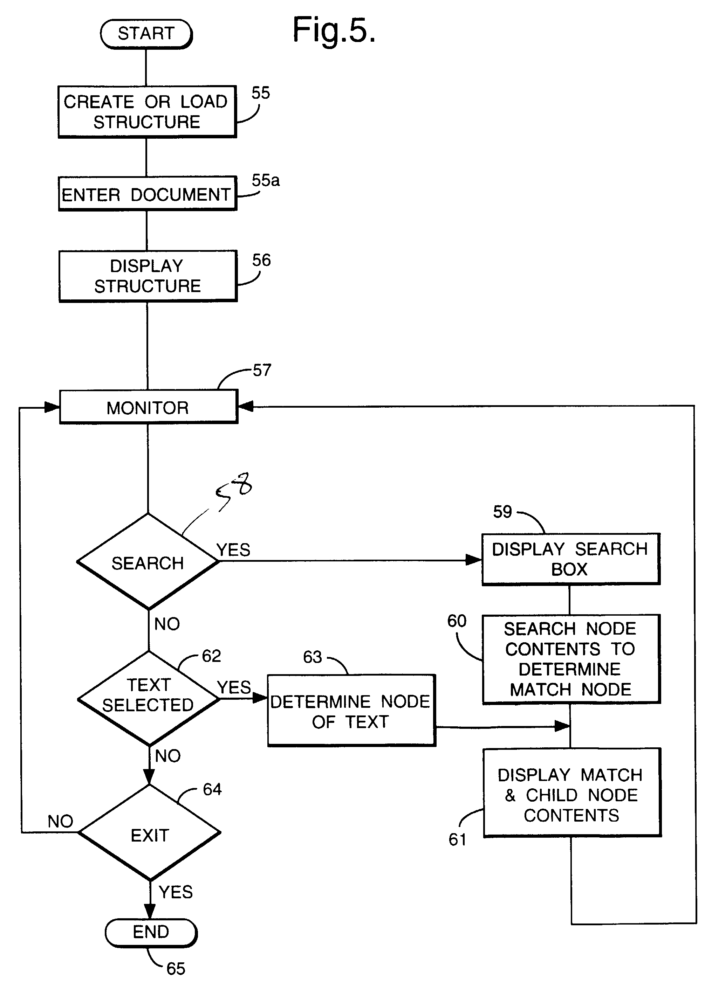

An overview of the way in which the document is stored, and then information retrieved from it, will now be given with reference to the flow-chart shown in figure 5.

A first step 55 in the procedure is to create a structure for storing the document or to a load a previously created structure for storing the document. This step employs a program called "Interleaf Version 5" which is marketed by the Interleaf Company. This program enables the document to be entered as a hierarchical structure of nodes. The hierarchical structure of nodes comprises a set of parent and child nodes. In the structure, each node contains part of the text of the document to be stored. The "Interleaf" program is held in the program partition of the memory shown in figure 3 and the parent child structure it is used to create is also saved to the memory as shown. The next step, as represented by box 55a, also involves the use of the Interleaf program. It involves entering the document to be stored by typing text via the keyboard 16. In this step, Interleaf presents a node of the structure and the user enters the relevant text for that node.

The next step is to display the structure to the user as a display on the VDU display 13, as represented by box 56. (This step may be inherent in the use of the Interleaf program in creating the structure in the previous step).

The processor then monitors the keyboard 16 and mouse 17 for commands input by the user, as represented by box 57.

One of the possible commands entered by the user could be a search request command in which case the result of a comparison with the input and a search request, as represented by box 58, will be positive. The next step in such a case will be for a search dialogue box to be displayed as represented by box 59.

The next step after that represented by box 59 is for all the contents of all the nodes of the structure to be searched for an occurrence of the string entered into the search dialogue box by the user. This step is represented by box 60.

When a match is found between the input string and the contents of a node, then the contents of that node and its children nodes are displayed. This step is represented by box 61.

After displaying the node contents, the program awaits a further input from the user by returning to the monitoring step represented by box 57.

Another command that may be entered by the user is to select text displayed on the display 13 by the user moving the cursor under mouse control and "clicking-on" the text. This possibility is catered for by the decision diamond 62.

If text is selected, then the next step is for the program to determine the node containing that text as represented by box 63.

Once the node is determined, its contents and the contents of its children nodes depending hierarchically from the node containing the selected text are displayed as represented by box 61. Again the program returns to the monitoring step represented by box 57. This results in an increase in the amount of information displayed to the user after the user has in effect decided that the information already displayed is relevant.

Another possible command is that the user wishes to exit the program. This possibility is catered for by decision diamond 64. If exit is not selected, then the program returns to the monitoring step represented by box 57. If exit is selected, then the program ends as represented by ellipse 65 the necessary, saving steps being executed to save any data.

This process will now be described in more detail for the earlier described document.

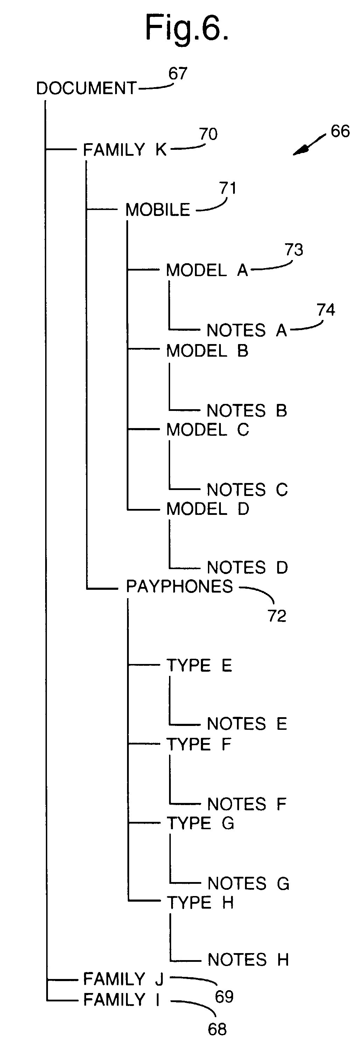

It is clear that there is a structure in the document in the first place. However in storing the document, it is classified and stored as a hierarchical or parent child structure utilising the program Interleaf. The resulting structure 66 is shown in figure 6.

This structure 66 has a root node 67 called document which contains the price list header 61. There are three nodes or leaves that branch from this root node; Family I leaf 68, Family J leaf 69 and Family K leaf 70. Only the structure of leaf 70 will be described further. Family I and Family J relate to those parts of the price list shown in figure 4 represented by lines of dots.

Leaf 70 contains the text of subdivision 42, that is to say, *"Telephone Models"* from figure 4. It will be seen that this leaf has a leaf MOBILE 71 and leaf PAYPHONE 72. These store the text *"MOBILE"* 43 and *"PAYPHONE"* 44 respectively.

The other textual information of figure 4 is stored as leaves of leaf "MOBILE" 71 or leaf *"PAYPHONE" 72.* For example, text 45 *"MODEL A"* is stored as leaf 73 with *"Notes on A"* 49 stored as leaf 74 NOTES A.

The structure 66 can be considered as a hierarchical or parent child structure. *"Notes A"* 74 is a child of MODEL A 73 which in turn is a child of MOBILE 71. *"MOBILE"* 71 is in turn a child of FAMILY K 70 which is the a child of DOCUMENT 67.

To retrieve information from the stored data structure, a search option is selected by a user of the system. This will be achieved by movement of a cursor over an option bar displayed on the display 13 under control of the mouse 17. The user will then type in the word (or other text) to be searched for. For example, perhaps the user wishes to find a telephone having a particular type of aerial say a *"quarter wave"* aerial and these words could be entered. The computer system 11 will then search through the stored structure 66 until it finds an occurrence of these words.

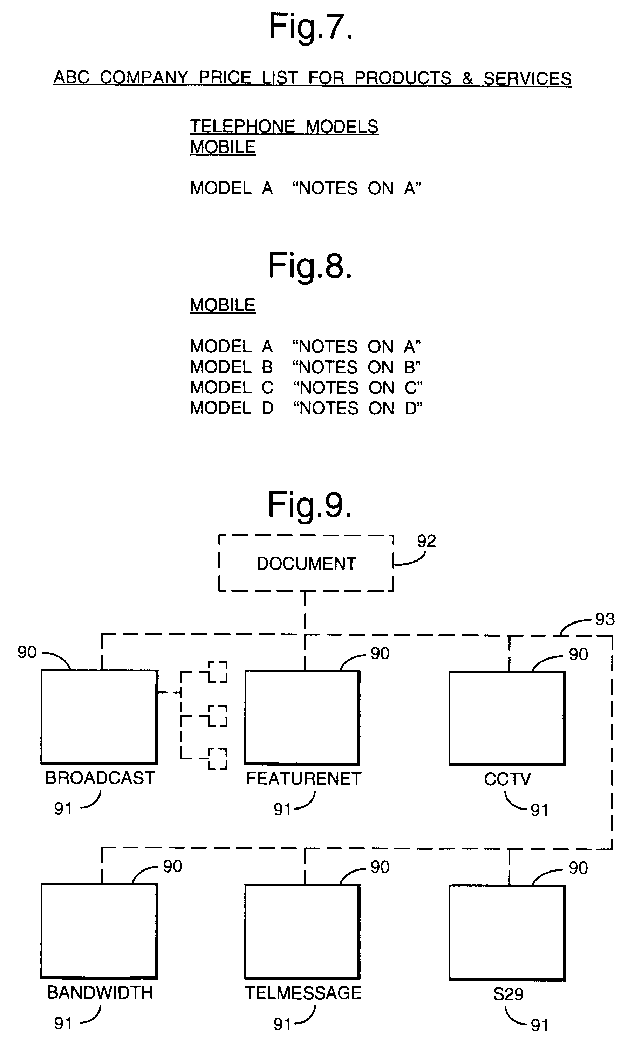

Let us suppose *"Notes on A"* contains a reference to this type of aerial. The system 11 displays to the user *"Notes on A"* and its lineage back to DOCUMENT 67. That is to say, text stored in leaves MODEL A 73, MOBILE 71, FAMILY K 70 and DOCUMENT 67. The text displayed is shown in figure 7.

If the user then wishes to look at related mobile phone information, the cursor can be clicked on the relevant displayed text and the family related to the leaf containing the text could then be displayed. For example, the user could *"click on"* the displayed text *"Mobile"* and the subdivisions 45, 46, 47 and 48 with accompanying notes could then be displayed as shown in figure 8.

To do this the program determines the node having the contents "clicked-on" and displays the contents of that node and its children by following the steps represented by boxes 62, 63 and 61 of figure 5.

Figure 9 shows another example of a structure for a price-list document. In this structure (again created by the use of Interleaf) the various possible products and services provide with book-like icons 90. These may be thought of as chapters or sections of the price-list document. Each icon 90 is accompanied by a descriptor 91. The relationship to a parent node document 92 of these sections is shown in broken lines 93 and it can be seen that all the icons have the same rank in the structure that is to say they are all siblings. The sections are further sub-divided into parts that is parts are children of each section as is shown in broken outline for the broadcast section.

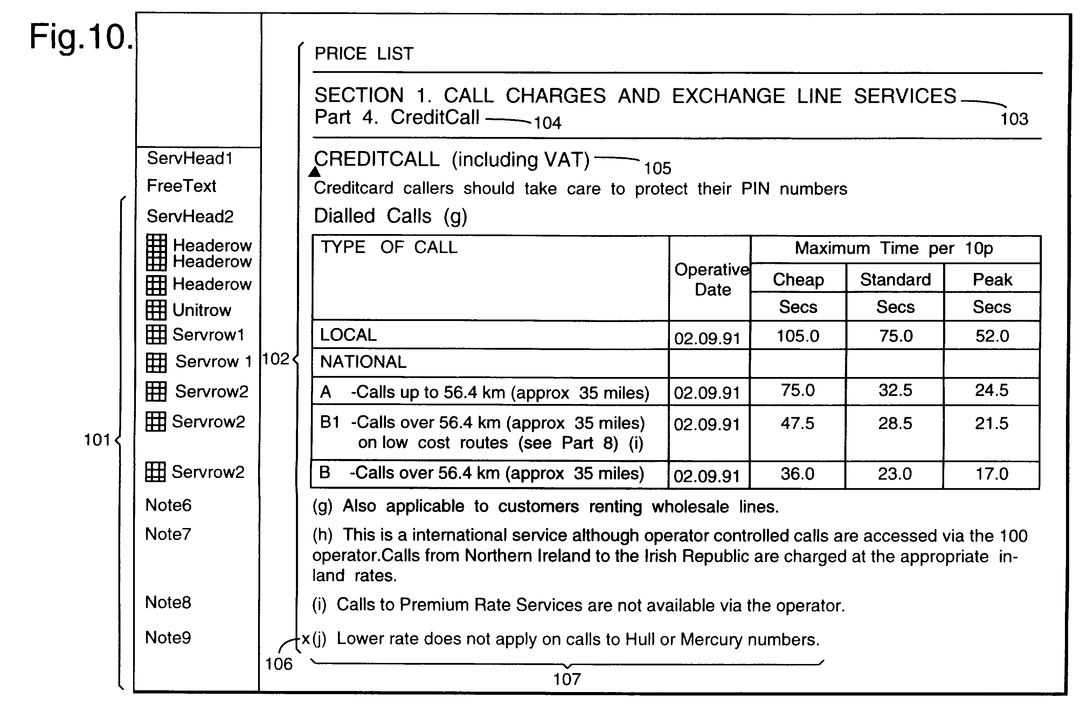

Figure 10 shows a display of part of one of the sections shown in figure 9. The display has two major zones.

A first zone 101 is concerned with the structure of the part.

A second zone 102 is a physical representation of that part, that is to say, a display of the stored document as it would appear if in hard-copy form.

The first zone 101 includes a number of descriptors of nodes in the structure of the displayed part. For example, ServHead 1 relates to a service header 103 which is the title for that part of the document. Free text relates to text 104 that is "Part 4. CreditCall". ServHead 2 relates to text 105 "CREDITCALL (including VAT)".

When defining the structure of the document using the Interleaf program the various possible textual fields of the parts are labelled to create the headings of the first zone 101.

When the document is entered the headings in the first zone 101 are selected as desired and the cursor is displayed at the appropriate point in the second zone 102. Text is then typed in. An example of this would be to select Note 9 in zone 101. The cursor would then appear at point 106 and the user could type in text 107.

Where the document stored on the computer undergoes a number of stages before it is published and issued there will be a number of versions present on the system at any one time. In order to prevent confusion each version could be displayed as an icon having a different colour or including dates or other indicia such as letters.

In the above described embodiments of the invention, the document to be stored is a price list of products and services. The invention is also applicable to the storage and retrieval of other documents such as bills, invoices or text-books. The information stored can include text as in the described embodiment or pictures or other graphical information. In some applications, for example, encyclopaedias the stored information may include sound and or moving images.

## Claims

1. A method of storing data on, and retrieving data from, a computer database, the method comprising the steps of:
creating in the computer database a hierarchical structure (66) of nodes (67 to 74) for storing portions of a document so that the portions of the document can be arranged in a hierarchical manner, each portion of the document being a member of a family of portions of the document of the same class; and
storing each portion of the document on a respective one of said nodes (67 to 74);
characterised in that the method comprises the further steps of:
in response to a search request by a user of the database relating to a particular item of data, searching the hierarchical structure (66) of nodes to find the node containing the item of data in the search request;
determining a family to which the portion of the document stored on said node belongs; and
for each of at least some of the members of said family, returning to the user at least part of the corresponding portion of the document.

2. A method as claimed in Claim 1, in which the parts of the document returned to the user are displayed to the user, said method comprising the additional steps of:
the user selecting an item from the parts of the documents returned to the user;
determining the node containing the selected item of data; and
returning to the user the portions of the document stored on the node containing the selected item of data and on nodes which depend hierarchically from this node.

3. A method as claimed in Claim 1 or Claim 2, in which more than one version of the document are stored on the computer database and each version is represented by a different icon.

4. A computer system comprising:
a computer database;
means for creating in the computer database a hierarchical structure (66) of nodes (67 to 74) on which portions of a document can be stored in a hierarchical manner so that each portion of the document is a member of a family of portions of the document of the same class; and
means for storing each portion of the document on a respective one of said nodes (67 to 74); and
characterised in that the computer system further comprises:
means for searching the hierarchical structure (66) of nodes, in response to a search request by a user of the database relating to a particular item of data, to find the node containing the item data in the search request;
means for determining a family to which the portion of the document stored on said node belongs; and
means for returning to the user, for each of at least some of the members of said family, at least part of the corresponding portion of the document.

## Patentansprüche

1. Verfahren zum Speichern von Daten in einer Computer-Datenbank und zum Wiedergewinnen von Daten hiervon, wobei das Verfahren die folgenden Schritte umfaßt:
Erzeugen einer hierarchischen Struktur (66) von Knoten (67 bis 74) in der Computer-Datenbank, um Teile eines Dokuments so zu speichern, daß die Teile des Dokuments in einer hierarchischen Weise angeordnet werden können, wobei jeder Teil des Dokuments ein Mitglied einer Familie von Teilen des Dokuments derselben Klasse ist; und
Speichern jedes Teils des Dokuments in einem entsprechenden der Knoten (67 bis 74);
dadurch gekennzeichnet, daß das Verfahren die weiteren Schritte umfaßt:
als Antwort auf eine Suchanforderung durch einen Anwender der Datenbank bezüglich eines besonderen Datenelements Durchsuchen der hierarchischen Struktur (66) von Knoten, um den das Datenelement in der Suchanforderung enthaltenden Knoten zu finden;
Bestimmen einer Familie, zu der der Teil des Dokuments, der in dem Knoten gespeichert ist, gehört; und
für jedes von wenigstens einigen der Mitglieder der Familie Zurückgeben wenigstens eines Teils des entsprechenden Teils des Dokuments an den Anwender.

2. Verfahren nach Anspruch 1, bei dem die Teile des Dokuments, die an den Anwender zurückgegeben werden, für den Anwender angezeigt werden, wobei das Verfahren die folgenden weiteren Schritte umfaßt:
Auswählen eines Elements aus den Teilen der Dokumente, die an den Anwender zurückgegeben werden, durch den Anwender;
Bestimmen des das ausgewählte Datenelement enthaltenden Knotens; und
Zurückgeben der Teile des Dokuments, die in dem das ausgewählte Datenelement enthaltenden Knoten und in den von diesem Knoten hierarchisch abhängenden Knoten gespeichert sind, an den Anwender.

3. Verfahren nach Anspruch 1 oder Anspruch 2, bei dem in der Computer-Datenbank mehr als eine Version des Dokuments gespeichert sind und jede Version durch ein anderes Symbol dargestellt wird.

4. Computersystem, mit:
einer Computer-Datenbank;
einer Einrichtung zum Erzeugen einer hierarchischen Struktur (66) von Knoten (67 bis 74), in denen Teile eines Dokuments in einer hierarchischen Weise gespeichert werden können, in der Computer-Datenbank, so daß jeder Teil des Dokuments ein Mitglied einer Familie von Teilen des Dokuments derselben Klasse ist; und
einer Einrichtung zum Speichern jedes Teils des Dokuments in einem entsprechenden der Knoten (67 bis 74); und
dadurch gekennzeichnet, daß das Computersystem ferner umfaßt:
eine Einrichtung zum Durchsuchen der hierarchischen Struktur (66) von Knoten als Antwort auf eine Anforderung zum Durchsuchen der Datenbank nach einem besonderen Datenelement von einem Anwender, um den das Datenelement in der Suchanforderung enthaltenden Knoten zu finden;
eine Einrichtung zum Bestimmen einer Familie, zu der der im Knoten gespeicherte Teil des Dokuments gehört und
eine Einrichtung zum Zurückgeben wenigstens eines Teils des entsprechenden Teils des Dokuments für jedes von wenigstens einigen der Mitglieder der Familie an den Anwender.

## Revendications

1. Procédé de mémorisation de données dans une base de données informatique, et de récupération des données à partir de celle-ci, le procédé comprenant les étapes consistant à :
créer dans la base de données informatique une structure hiérarchique (66) de noeuds (67 à 74) destinée à mémoriser des fragments d'un document de sorte que les fragments du document puissent être agencés d'une manière hiérarchique, chaque fragment du document constituant un membre d'une famille de fragments du document de la même classe, et
mémoriser chaque fragment du document sur un noeud respectif parmi lesdits noeuds (67 à 74),
caractérisé en ce que le procédé comprend les étapes supplémentaires consistant à :
en réponse à une demande de recherche d'un utilisateur de la base de données se rapportant à un élément particulier des données, effectuer une recherche dans la structure hiérarchique (66) des noeuds pour trouver le noeud contenant l'élément de données de la demande de recherche,
déterminer, une famille à laquelle appartient le fragment du document mémorisé sur ledit noeud, et
pour chaque membre parmi au moins certains des membres de ladite famille, renvoyer à l'utilisateur au moins une partie du fragment correspondant du document.

2. Procédé selon la revendication 1, dans lequel les parties du document renvoyées à l'utilisateur sont présentées à l'utilisateur, ledit procédé comprenant les étapes supplémentaires consistant à :
faire sélectionner par l'utilisateur un élément à partir des parties des documents renvoyées à l'utilisateur,
déterminer le noeud contenant l'élément sélectionné de données, et
renvoyer à l'utilisateur les parties du document mémorisé sur le noeud contenant l'élément sélectionné des données et sur les noeuds qui dépendent hiérarchiquement de ce noeud.

3. Procéàé selon la revendication 1 ou la revendication 2, dans lequel plus d'une version du document est mémorisée dans la base de données informatique et chaque version est représentée par une icône différente.

4. Système informatique comprenant :
une base de données informatique,
un moyen destiné à créer dans la base de données informatique une structure hiérarchique (66) de noeuds (67 à 74) sur lesquels des fragments d'un document peuvent être mémorisés de manière hiérarchique de sorte que chaque fragment du document soit un membre d'une famille de fragments du document de la même classe, et
un moyen destiné à mémoriser chaque fragment du document sur un noeud respectif parmi lesdits noeuds (67 à 74), et
caractérisé en ce que le système informatique comprend en outre :
un moyen destiné à effectuer une recherche dans la structure hiérarchique (66) des noeuds, en réponse à une demande de recherche d'un utilisateur de la base de données se rapportant à un élément particulier de données, afin de trouver le noeud contenant les données de l'élément de la demande de recherche,
un moyen destiné à déterminer une famille à laquelle appartient le fragment du document mémorisé sur ledit noeud, et
un moyen destiné à renvoyer à l'utilisateur, pour chacun d'au moins certains des membres de ladite famille, au moins une partie du fragment correspondant du document.
